# EUROPEAN PATENT APPLICATION

(11) **EP 4 672 010 A1**
(43) Date of publication of application: **31.12.2025**
(21) Application number: 25170039.9
(22) Date of filing: 11.04.2025
(51) Int. Cl.: G06F 15/78, G06F 9/30, G06F 12/0888, G06F 12/0893, G06F 9/38

(54) **SYSTEM, METHOD AND APPARATUS FOR CONDITIONALLY OFFLOADING INSTRUCTION EXECUTION**

(30) Priority: 26.06.2024 US 202418754447
(71) Applicant: INTEL Corporation, Santa Clara, CA 95054 (US)
(72) Inventor: Hady, Frank, Portland OR, 97229 (US); Hughes, Christopher J., Santa Clara CA, 95051 (US); Peterson, Scott, Beaverton OR, 97006 (US)
(74) Representative: Samson & Partner Patentanwälte mbB

(57) **Abstract**

In one example, a processor includes: at least one core to execute instructions; and at least one cache memory coupled to the at least one core, the at least one cache memory to store data, at least some of the data a copy of data stored in a memory. The at least one core is to determine whether to conditionally offload a sequence of instructions for execution on a compute circuit associated with the memory, based at least in part on whether one or more first data is present in the at least one cache memory, the one or more first data for use during execution of the sequence of instructions. Other embodiments are described and claimed.

## Description

### Background

Commercially important applications, like Large Language Model (LLM) inferencing and similarity search in a large graph are increasingly memory bandwidth dominated with very low arithmetic intensity. These applications include subsections that are suitable for offload from a main processor of a computing system such as a central processing unit (CPU) to a different compute unit.

In some systems this different compute unit can be implemented within a different integrated circuit than the CPU. For example, some systems include accelerators and/or memory having other compute units. A memory can have a Memory Processing Unit (MPU) specially designed to have very high memory throughput, but much lower compute capability (e.g., floating point operations per second (flops)) than a CPU. By offloading certain operations to a MPU, a higher performance CPU-based system may be designed. However, depending on the location of data to be processed, offload may or may not improve performance, and in fact in certain instances, may hinder performance.

### Brief Description Of The Drawings

FIG. 1 is a block diagram of a system in accordance with an embodiment.
FIG. 2 is a block diagram of a cache memory in accordance with an embodiment.
FIG. 3 is a flow diagram of a method in accordance with an embodiment.
FIG. 4 is a flow diagram of a method in accordance with another embodiment.
FIG. 5 is a flow diagram of a method in accordance with yet another embodiment.
FIG. 6 illustrates an example computing system.
FIG. 7 illustrates a block diagram of an example processor in accordance with an embodiment.
FIG. 8 is a block diagram of a processor core in accordance with an embodiment.

### Detailed Description

In various embodiments, systems, methods and apparatus provide high-performance operation of workloads that benefit from identification of a location of workload data. More specifically, embodiments provide techniques to enable identification of whether at least some data to be used in execution of a given workload (generically referred to herein as a function, offload kernel, or sequence of instructions (where the sequence of instructions can be one or more instructions, where a single instruction sequence may be executed iteratively on multiple data elements)) is present in a cache hierarchy of a processor or is in a system memory coupled to such processor. These workloads that may be appropriate for offload may execute low complexity computation operations on data. Based at least in part on this identification of data presence, a processor is configured to conditionally offload the workload to an offload engine, e.g., a given compute circuit closely located with the system memory. Exemplary functions may be configured as a set of computations to be performed on data held locally within a subset of attached memory, with the result of those computations to be stored in that local memory. Thereafter the offloading processor may be made aware of the completion of the set of computations.

In this way, systems employing both general-purpose compute units (CPU or graphics processing unit (GPU)) with caches and accelerators placed physically closer to a portion of cacheable main memory, can consider the presence or absence of data in a cache hierarchy when determining the location of execution for a function. For a candidate offload function, the CPU, when it detects the presence of cached data within one or more cache memories of the CPU, can execute the function locally. Or upon detecting the absence of data, the CPU can send the function to the accelerator for faster execution.

In one or more implementations, an instruction can be executed to return the presence or absence of relevant data in the cache, enabling software running on the CPU/GPU to determine the highest performing and/or lower power consuming location (CPU/GPU or accelerator) for function execution.

With cache presence-informed offload decisions, a higher average performance may be achieved for workloads that can be accelerated by near memory compute (NMC) units. This increase in performance comes both from execution of a potential offloadable functions on the CPU when appropriate and from the avoidance of unnecessary cache flushes. Although embodiments are not limited in this regard, such workloads may include LLM inferencing and similarity search (such as may be used for web search and databases) as well as other large data applications. In addition to better average performance, lower per function energy consumption is realized, since offloaded execution enables data to move over a smaller distance within the system. Example workloads that may benefit from embodiments include workloads that feature: little compute per memory access (low arithmetic intensity), performance that is directly dependent on bandwidth, very high bandwidth requirements, high memory capacity requirements, and/or too little locality for effective caching.

By providing such workloads for execution on a compute unit close to memory, a very high bandwidth memory connection and access to memory can occur at low energy per bit. In an example embodiment, bandwidths greater than 1 terabyte per second (TB/s) can be realized locally on a system. This bandwidth is an order of magnitude higher than that available via a memory interconnect coupling processor and memory.

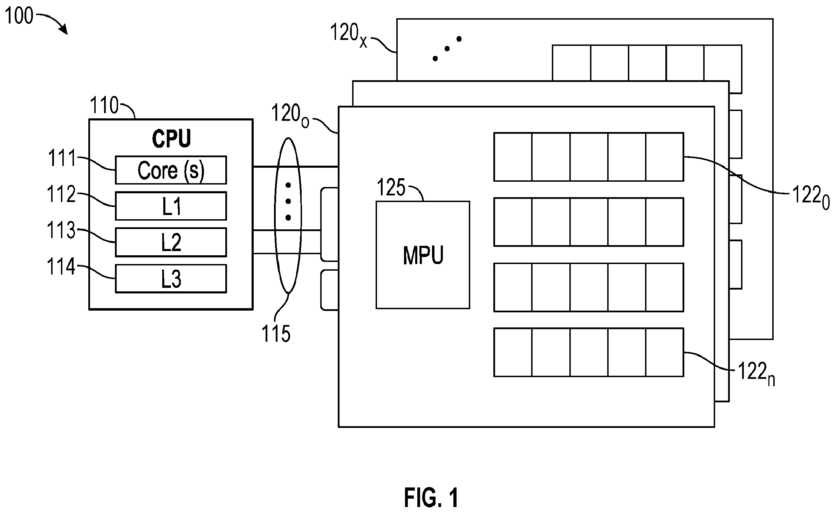

Referring now to FIG. 1, shown is a block diagram of a system in accordance with an embodiment. More specifically, FIG. 1 shows a system 100 having a CPU 110 coupled to a system memory 120 via an interconnect 115. In an embodiment, interconnect 115 is implemented as a Compute Express Link (CXL) link. In other embodiments, interconnect 115 may be implemented as any other high speed interconnect, such as an optical memory interconnect, or so forth. Further, while an example embodiment described herein is in connection with CXL-based technology, embodiments may be used in other coherent interconnect technologies such as an IBM XBus protocol, an Nvidia NVLink protocol, an AMD Infinity Fabric protocol, Infiniband, cache coherent interconnect for accelerators (CCIX) protocol or coherent accelerator processor interface (OpenCAPI). In this way, system 100 is implemented with CPU 110 and memory 120 having shared memory that may be maintained coherently, non-coherently, or partially coherently.

In the high level shown in FIG. 1, CPU 110 includes a plurality of cores 111. Understand that, depending upon implementation, cores 111 may be homogeneous or heterogeneous cores. For example, in some cases a mix of in-order and out-of-order core types may be present and/or higher performing/higher power cores and lower performing/lower power cores may be present.

As further shown, included in cores 111 and/or coupled thereto is a cache hierarchy. In the embodiment shown, the cache hierarchy is formed of a plurality of cache levels, namely a level 1 (L1) cache memory 112, a level 2 (L2) cache memory 113, and a level 3 (L3) cache memory 114. In one or more embodiments, the L1 and L2 caches may be included within the cores, while the L3 cache may be coupled to cores 111, and may be implemented as a shared cache. In some implementations, at least L3 cache 114 may be implemented as a distributed shared cache memory, in which different portions or slices may be closely associated with each of cores 111. In embodiments herein, cache circuitry is to provide information regarding location of cached data of particular address ranges may be included in each cache memory and/or distributed portion.

As further shown in FIG. 1, memory 120 may be implemented as a plurality of separate memory cards, which may be CXL-based memory cards. Each memory card includes a plurality of memory devices 122₀₋ₙ, which in embodiments may be implemented as dual in-line memory modules (DIMMs). For example, these DIMMs may be implemented as low power double data rate (LPDDR5) DIMMs.

As further illustrated, memory 120 includes an MPU 125. In various embodiments, MPU 125 may be implemented as a given type of compute circuit. As examples, MPU 125 can be implemented as a core, accelerator, fixed function unit or so forth. Typically, MPU 125 may have less complex compute capabilities than cores 111. For example, MPU 125 may be configured to efficiently perform relatively simple compute operations such as additions, multiplies and so forth.

In one or more examples, memory 120 may include or be implemented as an accelerator. Such a model permits both CPU 110 and MPU 125 (present on the accelerator) to have direct load/store access to the same memory. This means that both CPU 110 and MPU 125 can execute code operating on data held in that memory with high performance. It also means that they can share addresses to those data elements. These shared addresses may be based on a "different base, common offset" model, where offset addresses are the same for CPU 110 and MPU 125, while the base added to those offsets is different based on the specific virtual-to-physical translation. In another embodiment, a common virtual-to-physical understanding (shared virtual memory) can be employed, enabling full virtual address to be shared.

Systems built from such accelerators allow for an architecture scalable to very high aggregate memory bandwidths. With an implementation as in FIG. 1, both MPU 125 and CPU 110 can access the same memory at high performance with load/store (Id/st) operations and in a fully cacheable manner. Thus, the data set for the application can be stored in memory 120 and accessed for high arithmetic intensity work by CPU 110, and for low arithmetic intensity work by MPU 125 to complete memory accesses more quickly and at lower energy than with CPU 110.

In an example, CXL implementation in which interconnect 115 is a CXL link and memory 120 is a Type 1 or Type 2 CXL memory, for a highly bandwidth sensitive workload like LLM inferencing, executing on MPU 125 realizes an aggregate bandwidth of 9.6TB/s (assuming 8 CXL cards per system), far exceeding the 770 gigabytes per second (GB/s) available via CPU 110. For a reasonable sized GPT3 model (e.g., 2k prompt, 16k sequence, beam 4, batch 1), this translates to a token generation latency of just 20 milliseconds (msecs). This represents a speedup of over 10x versus a CPU generating tokens using its local memory (28msecs) and an even greater speedup 30x over that same CPU using CXL-resident memory to hold the data.

Note that these simple speedup calculations assume that data consumed by MPU 125 is not held in the CPU's cache, otherwise there would be delays and much lower throughput in accessing that data. It also assumes that caching data for execution on CPU 110 will not speed up its operation, since relevant workloads (e.g., LLM inferencing) are too large for caching, and further has limited locality within the model.

Embodiments thus enable CPU hardware and/or application software to know how much of the data for a function is present in a cache hierarchy. With this information, the cost of passing control can be reduced/avoided. This is so, as data present in the CPU cache is flushed, before signaling the MPU that it may now use that data. Thus, passing control is done only when needed.

In one or more embodiments, a conditional MPU enqueue command may be issued to enqueue an offload kernel to be executed on an accelerator conditionally based on the presence or absence of data needed by the offload kernel in the CPU's cache.

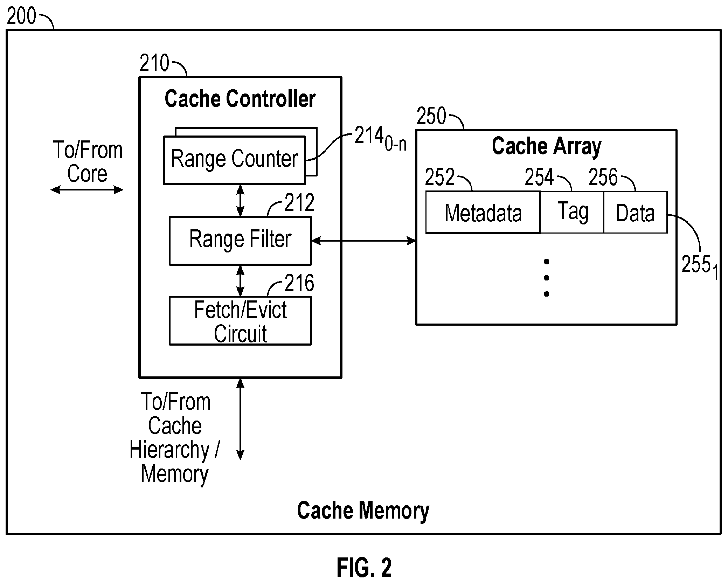

Referring now to FIG. 2, shown is a block diagram of a cache memory in accordance with an embodiment. As shown in FIG. 2, cache memory 200 includes a cache controller 210 and at least one storage array 250. Storage array 250 includes a plurality of cache lines 255. Representative cache line 255₁ includes a plurality of fields to store information. Specifically, cache line 255₁ includes a metadata field 252 (which may store cache coherency information according to a given cache coherency protocol, among other information), a tag field 254 to store a tag used to access the cache line, and a data field 256.

Cache controller 210 includes a filter 212 and a plurality of range counters 214₀₋ₙ. Although a plurality of range counters are shown in FIG. 1, in other cases a single range counter 214 may be present. In one or more embodiments, range counters 214 may be implemented as registers or other storage elements. In a particular implementation, range counters 214 can be implemented as configuration and/or control registers such as model specific registers (MSRs). In this way, count values stored within range counters 214 can be read by a core using a register read instruction such as an MSR read instruction.

Depending upon implementation, range counters 214 may be configured to store a count of cache lines present within cache memory 200 that are within a particular address range, where each counter 214 is associated with a different address range. In such cases, range counters 214 may be multi-bit registers. In other cases, range counters 214 can be implemented as a saturating counter that saturates at a relatively low value, such that a statistical representation of a number of cache lines for a given address range can be maintained. In yet other implementations, range counters 214 each may be implemented as a single bit. In such implementations, when set, a given range counter indicates presence of at least one cache line of the associated range within cache memory 200. When reset, the range counter indicates that no cache lines of the associated range are present.

As further shown, cache controller 210 includes fetch/eviction circuitry 216. Cache controller 210 configures filter 212 to monitor one or more address ranges of a memory. While different techniques to monitor address ranges are possible, in the embodiment of FIG. 2, filter 212 can leverage range counter 214 to monitor an address range. At memory allocation time, software programs filter 212 with the physical lower and upper bound memory addresses located in a region of the memory map, and an associated counter 214 is initialized to zero. This programming may be performed in response to a user-level cache filter configuration instruction, in some embodiments.

During execution, filter 212 watches physical memory accesses, and operates to increment counter 214 on fetches into cache memory 200 from the monitored address range and decrement counter 214 on evictions from the monitored address range. As such, counter 214 maintains a count of the number of cache lines from the range of interest resident in cache memory 200.

In yet other implementations, filter 212 and range counters 214 may be configured to return an indication of the number of items cached, the cache level in which data is held, and/or a percentage of items cached. Based at least in part on this information, a core may be configured to cause the cache memory to flush and/or invalidate the address range when the percentage cached is below a given threshold. And the core may be configured to prefetch the address range when the percentage cached is above this same (or different) threshold.

In one or more embodiments, there may be multiple range counters associated with each cache memory to provide measurement for multiple memory regions. In yet other implementations, these range counters and associated filters can be implemented in memory cards themselves (in a CPU readable fashion), particularly as the number of counters would scale as CXL devices were added to the system. For physically distributed caches (e.g., an L3 cache), each cache slice can be provided with a replicated filter and counter. In turn, software or hardware can be configured to query each slice and add the count values together when a determination of data presence is requested.

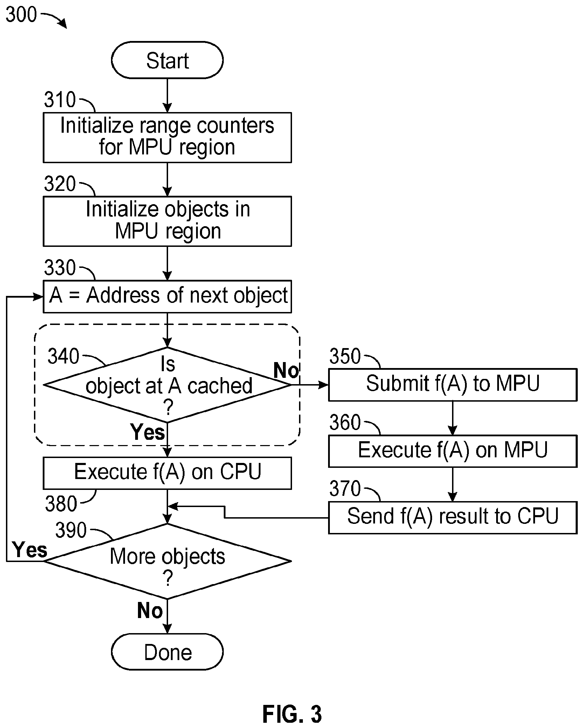

Referring now to FIG. 3, shown is a flow diagram of a method in accordance with an embodiment. More specifically in FIG. 3, method 300 is a method for conditionally offloading instructions for execution on an offload engine which, in the context of FIG. 3, is an MPU. In embodiments, method 300 may be performed by hardware circuitry of a processor alone and/or in combination with firmware and/or software.

As illustrated, method 300 begins by zeroing one or more range counters that are associated with an MPU region of memory (block 310). Next at block 320, a set of objects within the MPU region may be initialized. This MPU region may be a memory region in which at least some data of a function to be executed is located. Note that the MPU may be able to access all of the memory physically local to it, or only part of that memory. The same holds true for the processor across all the different MPU memories to which it is connected. Each MPUs local memory makes up just a range of the memory accessible to the processor in the system. In this way, any memory associated with an MPU may be for use by just that MPU, just the processor, or for use by both. Objects stored in these memories may be structures created by the code to store data. For example, they may contain shards of matrices that make up an Al model, they may contain a subset of the vertices of a directed graph. In addition to data structures, these memories may contain instruction sequences specifying functions to be executed, on the local MPU and/or processor.

Still referring to FIG. 3, next at block 330, an address of a next object is obtained. Then it is determined at diamond 340 whether this object is cached within a cache hierarchy of the CPU. As will be described further herein, in an implementation, this determination may be based at least in part on a count value obtained from one or more range counters.

If it is determined that the object is not cached, that means the function is appropriate for offloading. As such, control passes to block 350 where the function for this object is submitted to the MPU, which executes the function at block 360 and a result is sent back to the processor (block 370). Note that in some cases the actual result is not sent back to the CPU, only an indication that the result has been obtained. In this way, the result can be directly stored within the memory, potentially reducing bandwidth.

Still referring to FIG. 3, if instead it is determined that the object is in fact cached within the CPU cache hierarchy, control passes to block 380 where the function is executed on the CPU. If there are more objects present, as determined at diamond 390, control passes back to block 330, otherwise method 300 concludes.

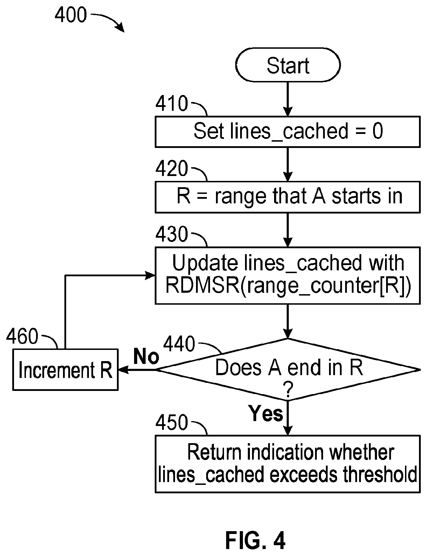

Referring now to FIG. 4, shown is a flow diagram of a method in accordance with another embodiment. In FIG. 4, method 400 is a method for identifying presence of cache lines of a memory region associated with a function. In embodiments, method 400 may be performed by hardware circuitry of a processor alone and/or in combination with firmware and/or software.

As illustrated, method 400 begins by setting a count of a number of lines cached to zero (block 410). Next at block 420, a variable R is set to a range that a given object A starts in. Control then passes to block 430 where the count of the lines cached is updated with a range counter value. Note that FIG. 4 contemplates an arrangement in which there may be multiple range counters (for different ranges) associated with a given object.

After this update, at block 430, control passes to diamond 440 where it is determined whether the object A ends within this range R. If not, the range is incremented (at block 460) and the number of lines cached is updated at block 430 with a count obtained from another range counter (namely the range counter associated with the incremented range).

When all ranges for this object have been considered, control passes to block 450. At block 450 it is determined whether the number of cache lines having data of this object exceeds a threshold, and an indication of whether the number of cache lines exceeds the threshold is returned. Note that this threshold may vary in different implementations, and can be any value greater than zero. When a sufficient amount of data is present within the cache hierarchy, the conditional offload decision can be made to not offload execution to the MPU, and instead to execute the function locally in the CPU.

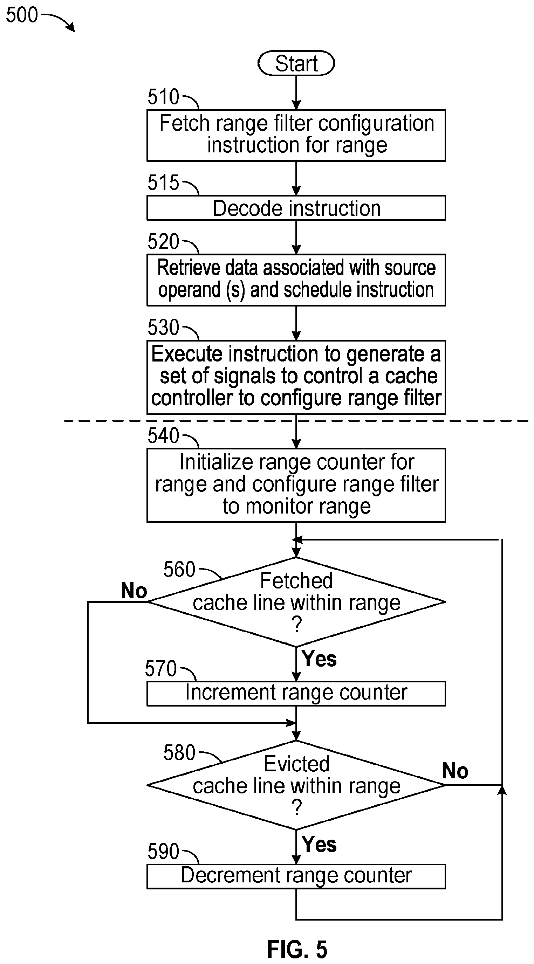

Referring now to FIG. 5, shown is a flow diagram of a method in accordance with yet another embodiment. More specifically, method 500 is a method for executing an instruction, namely, a user-level configuration instruction to cause configuration of a cache memory having a filter and one or more range counters as described herein, along with operation of the configured cache memory to maintain a count of cache lines associated with a given range. As such, method 500 may be performed by hardware circuitry of the processor and cache memory, including fetch, decode and execution circuitry of a core, as well as within a cache controller.

As illustrated, method 500 begins by fetching a range filter configuration instruction at block 510. Such instruction may be fetched when an application seeks to configure the range counting described herein. Next at block 515, the instruction is decoded. Then, at block 520, data associated with one or more source operands of this instruction are retrieved and the instruction is scheduled for execution on a given execution unit. At block 530 the instruction is executed.

In an embodiment, this execution causes a generation of control signals that are sent from the core to the relevant cache controller. The signals cause the cache controller to appropriately configure a range filter and associated range counter. To this end, some of the information provided by the signals include address range information, e.g., obtained from the one or more source operands, and signals to cause the appropriate configuration of the filter to monitor the relevant address range.

Still referring to FIG. 5, additionally shown are operations performed in the cache memory in response to these control signals. First at block 540, a range counter is initialized for a given range and the range filter is configured to monitor the range. These operations at block 540 may be performed by the cache controller. As such, at this point the cache memory is equipped to begin counting cache line accesses associated with the relevant address range.

As shown, it is determined at diamond 560 whether a fetched cache line is within the range. If so, at block 570, the range counter is updated by incrementing it. It is further determined at diamond 580 whether a cache line within the range has been evicted. If so, the range counter is decremented at block 590.

Continued operation through these blocks proceeds as cache lines are fetched and evicted from the cache memory. As such, a count value associated with cache lines storing data of a given address range is maintained. Understand that the count value can be provided to a core, e.g., in response to a read request such as may be made in response to a read MSR or other read instruction. Although shown at this high level in the embodiment of FIG. 5, many variations and alternatives are possible.

In some embodiments, a processor may be configured to enable a so-called Execute-Until-Hit mechanism. This conditional execution branching mechanism is implemented to offload a function to a MPU, such as where the complexity of compute operations is limited (e.g., adds, multiplies or so forth). If the execution of that offload encounters the need to pull a cache line from the CPU, execution is moved back to the CPU. In the event that execution is moved back to the CPU, it may start from the beginning of the offload, or using shared memory execution it can simply be resumed. This mechanism may be used in cases where there is uncertainty about what cache lines the function will access, and therefore it is impractical or difficult to test for the presence of every cache line the function might access. This might be the case when a function is passed a pointer to one of a linked set of structures, and the function will conditionally follow a pointer from that structure to one or more of the linked structures. Some functions may follow multiple levels of pointers this way. An offload decision can be made based on the presence of the first structure in CPU cache, but it would be impractical to test for the presence of every structure the function might need to visit. Instead the function can be sent optimistically to the MPU containing the first structure, and execute-until-hit occurs if the function follows a pointer to an object in another MPU. Many variations in the decision flow (i.e. multiple cache lines, percentage of the offload already executed) are possible.

When it is time to execute an offload operation, the CPU queries, via one or more cache filters, the range counter for given ranges. If this "not in cache" test passes, the offload kernel is enqueued in the specified MPU's submission queue, e.g., via a conditional MPU enqueue command. If the "not in cache" test fails, the command is not queued to the MPU's submission queue.

Multiple courses of action are possible in this case where at least some needed offload kernel data is found to be present in the cache. In the simplest case, the enqueue command simply returns a "not enqueued, data in cache" status. Upon receiving this status, the CPU (e.g., a cache associated with the cache) synchronously executes the offload kernel locally. Alternatively, the enqueue capability could target the offload kernel to a different queue, namely one held within the CPU and destined for execution on the CPU. This alternate approach allows the CPU to asynchronously execute the offload kernel, preserving the same control flow that would have occurred with MPU execution. Note that in either case, local CPU offload kernel execution (e.g., a core that shares the cache the data was found in, or shares the highest level of cache below that) is expected to complete more quickly than offloaded execution due to the presence of cached data.

Offloaded offload kernels for applications like LLM inference and similarity search are examples of sets of addresses that are well defined (not in need of runtime discovery) at offload kernel offload time. Further these sets of addresses can be specifiable as either a single address, a small list of addresses, or a range of addresses. As such, the enqueue capability can operate using a single address, a limited list of addresses, or a range of addresses.

With multiple addresses checked, there is also a useful possibility for more additional conditional offload thresholds covering partially cached data. As already described, the presence of any data in the CPU cache can delay offload kernel offload. But with multiple cache lines of data, it may be more useful to specify a threshold for offload. In such cases, the CPU may be configured to compare a determined number of cached cache lines to one or more thresholds, and offload when the number of present cache lines is below such threshold(s). Alternatively, since each specified set of addresses has a known number of cache lines at offload time, this threshold number could be specified as a percentage of cache lines within the offload set (within the range). This facility to conditionally specify offload even in the case of some data present in the cache can be used to cause execution on the MPU to proceed when only a small percentage of data is held within the cache.

A similar flow to that described above is possible with an Execute-Until-Hit implementation. In this case, execution may continue on the MPU through a small number (specified) of misses (meaning data is present in a CPU cache), but then is sent back to the CPU when a threshold number of hits is exceeded. Alternatively, the fraction of offload work already completed could be used as a criteria on a miss, allowing almost completed offloads to finish on the MPU.

An alternate approach to the functionality for conditionally offloading offload kernels based on cache state leaves control flow in the hands of software. This implementation uses the range counter mechanism to return an indication of presence or absence of data of a set of addresses within a CPU cache hierarchy. In this implementation, the offloading CPU submits a set of addresses (like the sets described above) used by the offload kernel to be offloaded, but not specify the offload kernel itself as part of the same capability. In response to this submission, an indication of the state of referenced data held in the cache is returned. Based at least in part on that indication, software decides where the offload kernel is to be executed.

In the simplest case of software control, a return from the range counter with a value of "true" (for example) can indicate that no data in the specified set is held within the cache. Alternatively, the range counter can return not only the true/false value, but also the number of items within the range held in the CPU cache. In one or more embodiments, a list of addresses held (more particularly a pointer to a list of addresses constructed in memory by the capability) can enable efficient CPU flushing of the cache lines, rather than a blind flushing of the cache. With any of these return indications summarized above, software can determine whether to enqueue the function to the MPU or to execute it locally on the CPU.

In one or more embodiments, this mechanism may also return an indication that the CPU could not (quickly) confirm the address range was or was not cached, indicating that software should use a series of these cache inspection instances to make an accurate determination. Alternatively, the Execute-Until-Hit functionality could be used to simply fail an offload back to the CPU when data is found to still exist in the CPU's cache during MPU offload kernel execution. Again the signal could be generated based on number of Cache lines or percent of offload kernel-completed thresholds provided to the MPU

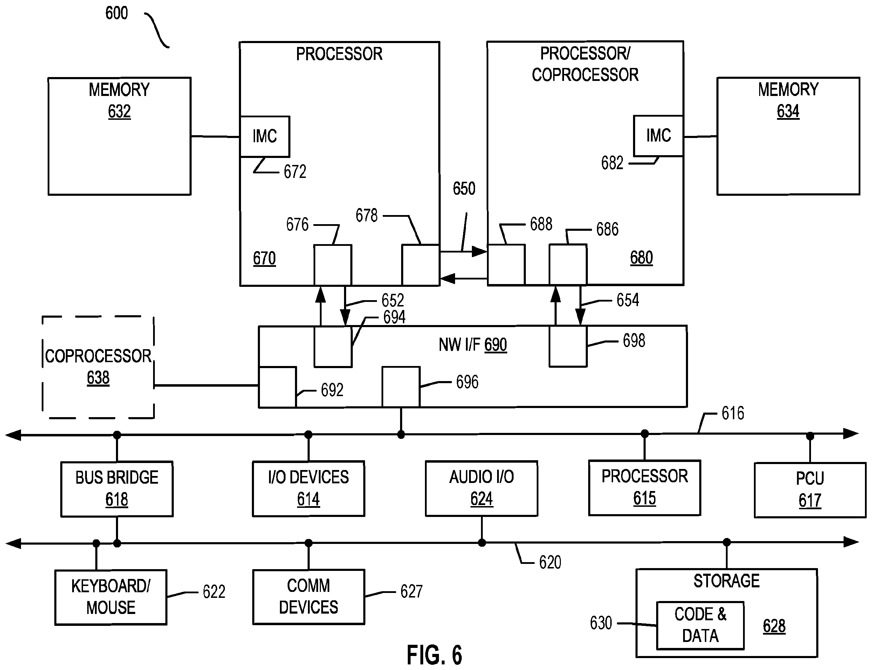

FIG. 6 illustrates an example computing system. Multiprocessor system 600 is an interfaced system and includes a plurality of processors or cores including a first processor 670 and a second processor 680 coupled via an interface 650 such as a point-to-point (P-P) interconnect, a fabric, and/or bus. In some examples, the first processor 670 and the second processor 680 are homogeneous. In some examples, first processor 670 and the second processor 680 are heterogenous. Though the example system 600 is shown to have two processors, the system may have three or more processors, or may be a single processor system. In some examples, the computing system is a SoC.

Processors 670 and 680 are shown including integrated memory controller (IMC) circuitry 672 and 682, respectively. Processor 670 also includes interface circuits 676 and 678; similarly, second processor 680 includes interface circuits 686 and 688. Processors 670, 680 may exchange information via the interface 650 using interface circuits 678, 688, and may include cache memories that are configured to maintain information to indicate an amount of function-associated data stored locally, as described herein. IMCs 672 and 682 couple the processors 670, 680 to respective memories, namely a memory 632 and a memory 634, which may be portions of main memory locally attached to the respective processors (and which may include MPUs configured to execute offloaded sequences of instructions as described herein).

Processors 670, 680 may each exchange information with a network interface (NW I/F) 690 via individual interfaces 652, 654 using interface circuits 676, 694, 686, 698. The network interface 690 (e.g., one or more of an interconnect, bus, and/or fabric, and in some examples is a chipset) may optionally exchange information with a coprocessor 638 via an interface circuit 692. In some examples, the coprocessor 638 is a special-purpose processor, such as, for example, a high-throughput processor, a network or communication processor, compression engine, graphics processor, general purpose graphics processing unit (GPGPU), neural-network processing unit (NPU), embedded processor, or the like.

Network interface 690 may be coupled to a first interface 616 via interface circuit 696. In some examples, first interface 616 may be an interface such as a Peripheral Component Interconnect (PCI) interconnect, a PCI Express interconnect or another I/O interconnect. In some examples, first interface 616 is coupled to a power control unit (PCU) 617, which may include circuitry, software, and/or firmware to perform power management operations with regard to the processors 670, 680 and/or co-processor 638. PCU 617 provides control information to a voltage regulator (not shown) to cause the voltage regulator to generate the appropriate regulated voltage. PCU 617 also provides control information to control the operating voltage generated. In various examples, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller (dedicated or general-purpose) or other control logic configured to execute its own dedicated power management code, sometimes referred to as P-code. In yet other examples, power management operations to be performed by PCU 617 may be implemented externally to a processor, such as by way of a separate power management integrated circuit (PMIC) or another component external to the processor. In yet other examples, power management operations to be performed by PCU 617 may be implemented within BIOS or other system software.

Various I/O devices 614 may be coupled to first interface 616, along with a bus bridge 618 which couples first interface 616 to a second interface 620. In some examples, one or more additional processor(s) 615, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 616. In some examples, second interface 620 may be a low pin count (LPC) interface. Various devices may be coupled to second interface 620 including, for example, a keyboard and/or mouse 622, communication devices 627 and storage circuitry 628. Storage circuitry 628 may be one or more non-transitory machine-readable storage media as described below, such as a disk drive or other mass storage device which may include instructions/code and data 630. Further, an audio I/O 624 may be coupled to second interface 620. Note that other architectures than the point-to-point architecture described above are possible. For example, instead of the point-to-point architecture, a system such as multiprocessor system 600 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

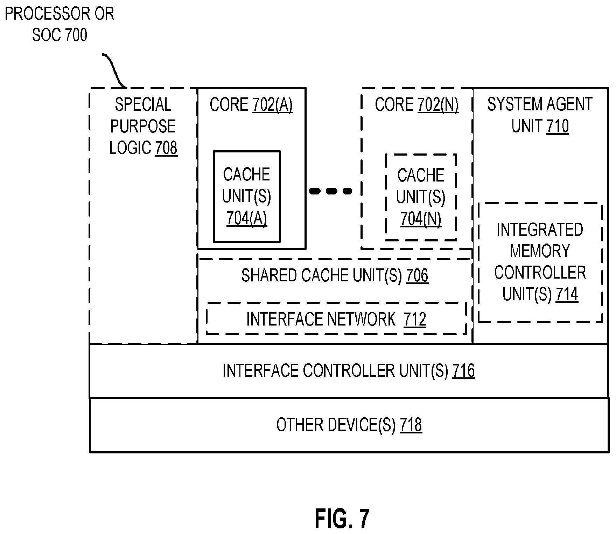

FIG. 7 illustrates a block diagram of an example processor and/or SoC 700 that may have one or more cores and an integrated memory controller. The solid lined boxes illustrate a processor 700 with a single core 702(A), system agent unit circuitry 710, and a set of one or more interface controller unit(s) circuitry 716, while the optional addition of the dashed lined boxes illustrates an alternative processor 700 with multiple cores 702(A)-(N), a set of one or more integrated memory controller unit(s) circuitry 714 in the system agent unit circuitry 710, and special purpose logic 708, as well as a set of one or more interface controller units circuitry 716. Note that the processor 700 may be one of the processors 670 or 680, or co-processor 638 or 615 of FIG. 6.

Thus, different implementations of the processor 700 may include: 1) a CPU with the special purpose logic 708 being integrated graphics and/or scientific (throughput) logic (which may include one or more cores, not shown), and the cores 702(A)-(N) being one or more general purpose cores (e.g., general purpose in-order cores, general purpose out-of-order cores, or a combination of the two); 2) a coprocessor with the cores 702(A)-(N) being a large number of special purpose cores intended primarily for graphics and/or scientific (throughput); and 3) a coprocessor with the cores 702(A)-(N) being a large number of general purpose in-order cores. Thus, the processor 700 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 700 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 704(A)-(N) within the cores 702(A)-(N), a set of one or more shared cache unit(s) circuitry 706, and external memory (not shown) coupled to the set of integrated memory controller unit(s) circuitry 714. The set of one or more shared cache unit(s) circuitry 706 may include one or more mid-level caches, such as level 2 (L2), level 3 (L3), level 4 (L4), or other levels of cache, such as a last level cache (LLC), and/or combinations thereof, and which may include control circuitry to maintain count information of address ranges as described herein. While in some examples interface network circuitry 712 (e.g., a ring interconnect) interfaces the special purpose logic 708 (e.g., integrated graphics logic), the set of shared cache unit(s) circuitry 706, and the system agent unit circuitry 710, alternative examples use any number of well-known techniques for interfacing such units. In some examples, coherency is maintained between one or more of the shared cache unit(s) circuitry 706 and cores 702(A)-(N). In some examples, interface controller unit circuitry 716 couple the cores 702 to one or more other devices 718 such as one or more I/O devices, storage, one or more communication devices (e.g., wireless networking, wired networking, etc.), etc.

In some examples, one or more of the cores 702(A)-(N) are capable of multi-threading. The system agent unit circuitry 710 includes those components coordinating and operating cores 702(A)-(N). The system agent unit circuitry 710 may include, for example, power control unit (PCU) circuitry and/or display unit circuitry (not shown). The PCU may be or may include logic and components needed for regulating the power state of the cores 702(A)-(N) and/or the special purpose logic 708 (e.g., integrated graphics logic). The display unit circuitry is for driving one or more externally connected displays.

The cores 702(A)-(N) may be homogenous in terms of instruction set architecture (ISA). Alternatively, the cores 702(A)-(N) may be heterogeneous in terms of ISA; that is, a subset of the cores 702(A)-(N) may be capable of executing an ISA, while other cores may be capable of executing only a subset of that ISA or another ISA.

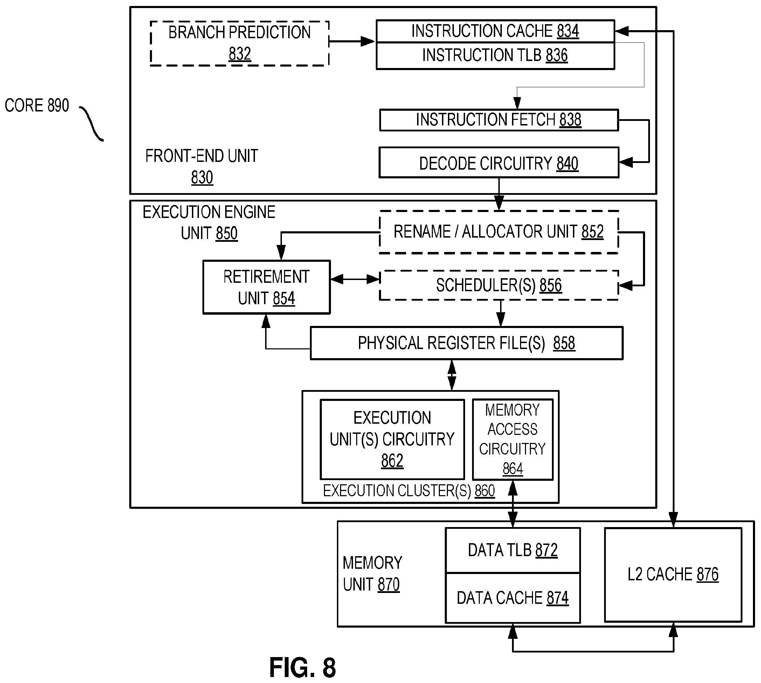

FIG. 8 shows a processor core 890 including front-end unit circuitry 830 coupled to execution engine unit circuitry 850, and both are coupled to memory unit circuitry 870. The core 890 may be a reduced instruction set architecture computing (RISC) core, a complex instruction set architecture computing (CISC) core, a very long instruction word (VLIW) core, or a hybrid or alternative core type. As yet another option, the core 890 may be a special-purpose core, such as, for example, a network or communication core, compression engine, coprocessor core, general purpose computing graphics processing unit (GPGPU) core, graphics core, or the like.

The front-end unit circuitry 830 may include branch prediction circuitry 832 coupled to instruction cache circuitry 834, which is coupled to an instruction translation lookaside buffer (TLB) 836, which is coupled to instruction fetch circuitry 838, which is coupled to decode circuitry 840. In one example, the instruction cache circuitry 834 is included in the memory unit circuitry 870 rather than the front-end circuitry 830. The decode circuitry 840 (or decoder) may decode instructions including the cache filter configuration instruction described herein, and generate as an output one or more micro-operations, micro-code entry points, microinstructions, other instructions, or other control signals, which are decoded from, or which otherwise reflect, or are derived from, the original instructions. The decode circuitry 840 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 840 may be implemented using various different mechanisms. Examples of suitable mechanisms include, but are not limited to, look-up tables, hardware implementations, programmable logic arrays (PLAs), microcode read only memories (ROMs), etc. In one example, the core 890 includes a microcode ROM (not shown) or other medium that stores microcode for certain macroinstructions (e.g., in decode circuitry 840 or otherwise within the front-end circuitry 830). In one example, the decode circuitry 840 includes a micro-operation (micro-op) or operation cache (not shown) to hold/cache decoded operations, micro-tags, or micro-operations generated during the decode or other stages of the processor pipeline 800. The decode circuitry 840 may be coupled to rename/allocator unit circuitry 852 in the execution engine circuitry 850.

The execution engine circuitry 850 includes the rename/allocator unit circuitry 852 coupled to retirement unit circuitry 854 and a set of one or more scheduler(s) circuitry 856. The scheduler(s) circuitry 856 represents any number of different schedulers, including reservations stations, central instruction window, etc. In some examples, the scheduler(s) circuitry 856 can include arithmetic logic unit (ALU) scheduler/scheduling circuitry, ALU queues, address generation unit (AGU) scheduler/scheduling circuitry, AGU queues, etc.

The scheduler(s) circuitry 856 is coupled to the physical register file(s) circuitry 858. Each of the physical register file(s) circuitry 858 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 858 includes vector registers unit circuitry, writemask registers unit circuitry, and scalar register unit circuitry. These register units may provide architectural vector registers, vector mask registers, general-purpose registers, etc. The physical register file(s) circuitry 858 is coupled to the retirement unit circuitry 854 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 854 and the physical register file(s) circuitry 858 are coupled to the execution cluster(s) 860. The execution cluster(s) 860 includes a set of one or more execution unit(s) circuitry 862 and a set of one or more memory access circuitry 864. The execution unit(s) circuitry 862 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 856, physical register file(s) circuitry 858, and execution cluster(s) 860 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 864). It should also be understood that where separate pipelines are used, one or more of these pipelines may be out-of-order issue/execution and the rest in-order.

In some examples, the execution engine unit circuitry 850 may perform load store unit (LSU) address/data pipelining to an Advanced Microcontroller Bus (AMB) interface (not shown), and address phase and writeback, data phase load, store, and branches.

The set of memory access circuitry 864 is coupled to the memory unit circuitry 870, which includes data TLB circuitry 872 coupled to data cache circuitry 874 coupled to level 2 (L2) cache circuitry 876, which may include cache controller circuitry to maintain count information for different address ranges as described herein. In one example, the memory access circuitry 864 may include load unit circuitry, store address unit circuitry, and store data unit circuitry, each of which is coupled to the data TLB circuitry 872 in the memory unit circuitry 870. The instruction cache circuitry 834 is further coupled to the level 2 (L2) cache circuitry 876 in the memory unit circuitry 870. In one example, the instruction cache 834 and the data cache 874 are combined into a single instruction and data cache (not shown) in L2 cache circuitry 876, level 3 (L3) cache circuitry (not shown), and/or main memory. The L2 cache circuitry 876 is coupled to one or more other levels of cache and eventually to a main memory.

The following examples pertain to further embodiments.

In one example, a processor includes: at least one core to execute instructions; and at least one cache memory coupled to the at least one core, the at least one cache memory to store data, at least some of the data a copy of data stored in a memory, where the at least one core is to determine whether to conditionally offload a sequence of instructions for execution on a compute circuit associated with the memory, based at least in part on whether one or more first data is present in the at least one cache memory, the one or more first data for use during execution of the sequence of instructions.

In an example, the at least one core is to determine whether the one or more first data is present in the at least one cache memory based at least in part on a count value stored in at least one storage, the count value associated with a range of addresses within the memory associated with the sequence of instructions.

In an example, the at least one core is to execute a read instruction to read the count value from the at least one storage, the at least one storage comprising a control register of the at least one cache memory.

In an example, the at least one core is to execute a plurality of read instructions to read a count value from each of a plurality of control registers, each of the plurality of control registers associated with a different range of addresses within the memory, the count value of each of the plurality of control registers associated with a different range of addresses within the memory associated with the sequence of instructions.

In an example, the at least one core is to obtain a total count value based on a sum of the count value from each of the plurality of control registers, and the at least one core is to conditionally offload the sequence of instructions for execution on the compute circuit, based at least in part on the total count value.

In an example, the at least one core is to execute the sequence of instructions and not conditionally offload the sequence of instructions to the compute circuit when the count value exceeds a threshold.

In an example, the at least one core is to enqueue the sequence of instructions in a memory of the processor, to enable the at least one core to asynchronously execute the sequence of instructions.

In an example, the at least one core is to execute a configuration instruction, the configuration instruction comprising at least one operand to define the range of addresses and an opcode. Based at least in part on the opcode, the at least one core is to cause a cache controller of the at least one cache memory to: monitor cache accesses to the range of addresses; and control the at least one storage to store the count value based on the cache accesses.

In an example, when at least some of the one or more first data is present in the at least one cache memory, the at least one core is to execute the sequence of instructions and not conditionally offload the sequence of instructions to the compute circuit.

In an example, the processor is coupled to the memory via a high speed interconnect, the memory comprising the compute circuit, and the processor and the compute circuit having shared access to the range of addresses within the memory.

In an example, after the offload of the sequence of instructions to the compute circuit, the processor is to receive a migration of the sequence of instructions from the compute circuit when at least some of the first data is present within the at least one cache memory.

In another example, an apparatus includes: at least one core to execute instructions; and at least one cache memory. The at least one cache memory includes: a cache controller to control operation of the at least one cache memory; at least one storage array coupled to the cache controller, the at least one storage array comprising a plurality of cache lines each to store data; a filter coupled to the at least one storage array to monitor the storage array for storage and eviction of first data within an address range associated with a sequence of instructions; and a first register coupled to the filter to store a count based at least in part on a number of cache lines of the plurality of cache lines that store the first data.

In an example, the filter is to increment the count stored in the first register in response to insertion into the least one storage array of a datum of the first data.

In an example, the filter is to decrement the count stored in the first register in response to eviction from the least one storage array of a datum of the first data.

In an example, the at least one core is to obtain the count from the first register and, based at least in part on the count, offload the sequence of instructions to an offload engine of a memory having the address range, to cause the offload engine to execute the sequence of instructions.

In an example, the at least one core, when the count exceeds a threshold, is to prefetch, from a memory having the address range, at least some of the first data and execute the sequence of instructions using the at least some of the first data.

In yet another example, an apparatus includes: decoder circuitry to decode a single instruction, the single instruction to include a field for an identifier of a first source operand, a field for an identifier of a second source operand, and a field for an opcode, the opcode to indicate execution circuitry is to cause a cache controller of a cache memory to configure a filter circuit of the cache memory to monitor cache accesses to an address range associated with a function; and the execution circuitry to execute the decoded single instruction according to the opcode to send to the cache controller an indication of the address range and one or more signals to cause the cache controller to configure the filter circuit to monitor the cache accesses to the address range.

In an example, the execution circuitry is to send the indication of the address range based on the first source operand comprising a first boundary address of the address range and the second source operand comprising a second boundary address of the address range.

In an example, the decoder circuitry is to decode a read instruction, and the execution circuitry is to execute the read instruction to request a count value from the filter circuit of the cache memory, the count value based on a number of cache lines of the cache memory that store data of the address range.

In an example, the apparatus is to offload the function for execution on a memory processor of a memory, based at least in part on the count value.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SOC or other processor, is to configure the SOC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. A processor comprising:
at least one core to execute instructions; and
at least one cache memory means coupled to the at least one core, the at least one cache memory to store data, at least some of the data a copy of data stored in a memory,
wherein the at least one core is to determine whether to conditionally offload a sequence of instructions for execution on a compute circuit associated with the memory, based at least in part on whether one or more first data is present in the at least one cache memory, the one or more first data for use during execution of the sequence of instructions.

2. The processor of claim 1, wherein the at least one core is to determine whether the one or more first data is present in the at least one cache memory based at least in part on a count value stored in at least one storage, the count value associated with a range of addresses within the memory associated with the sequence of instructions.

3. The processor of claim 2, wherein the at least one core is to execute a read instruction to read the count value from the at least one storage, the at least one storage comprising a control register of the at least one cache memory.

4. The processor of claim 3, wherein the at least one core is to execute a plurality of read instructions to read a count value from each of a plurality of control registers, each of the plurality of control registers associated with a different range of addresses within the memory, the count value of each of the plurality of control registers associated with a different range of addresses within the memory associated with the sequence of instructions.

5. The processor of claim 4, wherein the at least one core is to obtain a total count value based on a sum of the count value from each of the plurality of control registers, and the at least one core is to conditionally offload the sequence of instructions for execution on the compute circuit, based at least in part on the total count value.

6. The processor of any of claims 2-5, wherein the at least one core is to execute the sequence of instructions and not conditionally offload the sequence of instructions to the compute circuit when the count value exceeds a threshold.

7. The processor of claim 6, wherein the at least one core is to enqueue the sequence of instructions in a memory of the processor, to enable the at least one core to asynchronously execute the sequence of instructions.

8. The processor of any of claims 2-7, wherein the at least one core is to execute a configuration instruction, the configuration instruction comprising at least one operand to define the range of addresses and an opcode,
wherein based at least in part on the opcode, the at least one core is to cause a cache controller of the at least one cache memory to:
monitor cache accesses to the range of addresses; and
control the at least one storage to store the count value based on the cache accesses.

9. The processor of any of claims 1-8, wherein when at least some of the one or more first data is present in the at least one cache memory, the at least one core is to execute the sequence of instructions and not conditionally offload the sequence of instructions to the compute circuit.

10. The processor of any of claims 1-9, wherein the processor is coupled to the memory via a high speed interconnect, the memory comprising the compute circuit, and the processor and the compute circuit having shared access to the range of addresses within the memory.

11. The processor of any of claims 1-10, wherein after the offload of the sequence of instructions to the compute circuit, the processor is to receive a migration of the sequence of instructions from the compute circuit when at least some of the first data is present within the at least one cache memory.
